Europäisches Patentamt

European Patent Office

Office européen des brevets

(19)

(11) **EP 0 719 609 B1**

(12) **EUROPEAN PATENT SPECIFICATION**

(45) Date of publication and mention
of the grant of the patent:
**09.02.2000 Bulletin 2000/06**

(51) Int Cl.7: **B22F 1/00**, H01J 7/18,
B22F 3/11, C22C 1/04

(21) Application number: **95830496.6**

(22) Date of filing: **29.11.1995**

(54) **A process for producing high-porosity non-evaporable getter materials and materials thus obtained**

Verfahren zur Herstellung eines hochporösen nicht verdampfbaren Gettermaterials und damit
hergestelltes Material

Procédé de préparation d'un matériau de getter non-évaporable à porosité élevée ainsi que le
matériau ainsi obtenu

(84) Designated Contracting States:
**AT DE FR GB NL SE**

(30) Priority: **02.12.1994 IT MI942449**
**14.04.1995 IT MI950779**

(43) Date of publication of application:
**03.07.1996 Bulletin 1996/27**

(73) Proprietor: **SAES GETTERS S.P.A.**
**I-20151 Milano (IT)**

(72) Inventors:
• **Conte, Andrea**
**Milano (IT)**
• **Carella, Sergio**
**Varese (IT)**

(74) Representative: **Adorno, Silvano et al**
**c/o SOCIETA' ITALIANA BREVETTI S.p.A.**
**Via Carducci, 8**
**20123 Milano (IT)**

(56) References cited:
**FR-A- 2 171 076**   **GB-A- 2 077 487**
**US-A- 4 671 889**

**Description**

The present invention relates to a process for obtaining non-evaporable getter materials having a very high porosity and to the getter materials thus obtained.

In particular, the present invention relates to a process for obtaining a non-evaporable getter material which has particularly high values of porosity and gas absorption rate and to the non-evaporable getter material thus obtained.

Non-evaporable getter materials (known in the art as NEG materials) are widely used in the field of vacuum preservation, e.g. for thermal insulation or inside the lamps, or in the purification of inert gases. The most common NEG materials are metals such as Zr, Ti, Nb, Ta, V or alloys thereof, with the optional addition of one or more other elements; examples are the alloy having a weight per cent composition Zr 84% - Al 16%, manufactured and sold by SAES GETTERS, Milan, under the name St 101®, or the alloy having a weight per cent composition Zr 70% - V 24.6% - Fe 5.4%, manufactured and sold by SAES GETTERS, under the name St 707.

These materials act by surface chemisorption of reactive gases such as CO, $CO_2$, $H_2O$, $O_2$, $H_2$. Apart from $H_2$, which dissociates into H atoms and diffuse inside the material even at low temperatures, for the other gases the chemisorption is an essentially superficial phenomenon up to temperatures which, depending on the NEG material, may range from about 200 to 500°C. The diffusion of the chemisorbed species inside the material takes place at higher temperatures.

Whichever the gas, the surface of the NEG material has a fundamental role in the phenomenon of the sorption of reactive gases. Consequently, a large specific surface (surface per unit weight) of the material and an easy access of the gases to the surface of the grains of the NEG material are parameters of fundamental importance for the best performance thereof. These characteristics would be assured by the use of NEG materials in the form of powders, but this solution can not be applied in practice. NEG materials are employed in practice in the form of devices; getter devices are prepared from the powders, that may be compressed in order to obtain pellets which are then sintered to give them the required mechanical strength; the powders may be loaded and compressed in open containers; finally, the powders may be cold rolled onto a support. Regardless of the process employed to produce the device, the compression and/or heat sintering operations lead to a reduction of the specific surface with respect to the starting powder; moreover, the access of gases to the most internal getter particles is hindered, with a consequent decrease in the absorption capacity and particularly in the gas absorption rate.

In order to overcome these drawbacks, patent application DE-A-2,204,714 discloses a method for preparing porous NEG devices based on metallic zirconium. According to this method, graphite powder and an organic component, such as for example ammonium carbamate, are added to the zirconium powder; the weight of the organic component may reach the sum of the weights of zirconium and graphite. During the heat sintering treatment, the organic component evaporates thus leaving a porous structure consisting in zirconium and graphite, in which graphite acts as an anti-sintering agent for zirconium, thus preventing an excessive reduction of the specific surface.

In said patent application there is cited only the use of elemental components and not of alloys, and no mention is made of the particle size of the components, apart from the organic component which is added in the form of powder grains having a size in the range of millimeters. Due to the size of the organic component, the final getter material has a structure with a high ratio between the volume of the porosities and the geometric volume of the device; however, the porosity distribution obtained by the process disclosed in said patent application is not such as to optimize the accessibility of gases to the surface of the most internal NEG material grains. Moreover, the materials prepared according to the process of said patent application have not good mechanical properties.

Patent GB-2,077,487 discloses a porous NEG material obtained from a powder mixture of a metallic getter material, such as titanium or zirconium, and the St 707 alloy, previously mentioned, as the anti-sintering agent. According to said patent, the particles of the metal component have a size lower then about 125 μm, whereas the particles of the St 707 alloy have a size lower than about 400 μm, however greater than the metallic component size. The patent specification states that this ratio between the size of the two materials is selected so as to prevent an excessive sintering of the metal during the heat treatment, which would lead to a reduction of the specific surface and consequently to a lower efficiency of the product as getter. In this patent the use of an organic component is not indicated.

Finally, patent US-A-4,428,856 discloses a porous non-evaporable getter material containing, on a weight basis, from 50 to 98% of titanium, from 1.5 to 30% of a high melting point metal selected among niobium, tantalum, molybdenum and tungsten and from 0.5 to 20% of titanium hydride; in this patent it is stated that zirconium powders are easily flammable and they can start explosions, whereby one of the objects of the patent is to provide a getter composition avoiding the use of zirconium.

The characteristics of porosity and specific surface of the porous NEG materials of prior art, though improved with respect to those of conventional NEGs, are still not sufficient for particular applications, such as small-volume getter pumps, in which high performances are required to the getter material.

The object of the present invention is to provide a process for preparing a non-evaporable getter material having improved characteristics of porosity and gas absorption rate with respect to prior art materials together with a good mechanical strength.

According to the present invention, this and other objects are achieved by means of a process for preparing non-evaporable getter materials having improved characteristics of porosity and gas sorption rate, comprising the following steps:

A) preparing a mixture of:

i) powders of a metallic getter element with grain size lower than about 70 µm;

ii) powders of one or more getter alloys, with grain size lower than about 40 µm;

iii) powders of an organic component solid at room temperature having the characteristic of sublimating or decomposing into gaseous products without leaving residues through mere exposure to air or during the subsequent heat treatments, in two sieve fractions such that the grains of the first said fraction have a size lower than 50 µm, the grains of the second fraction have a size between 50 and about 150 µm and the weight ratio between the two fractions is between 4:1 and 1:4; wherein the weight of the organic component is between 10 and 40% of the overall weight of the powder mixture;

B) subjecting the powder mixture of point A to compression at a pressure lower than 1000 kg/cm$^2$; and

C) sintering the compressed powder mixture by vacuum or inert gas treatment at a temperature between 900 and 1200°C for a time between 5 minutes and 1 hour.

The metallic getter element may be any of the elemental metals employed in the field, such as zirconium, titanium, niobium, vanadium and tantalum; among these, titanium and, particularly, zirconium are preferred.

This metallic getter element is employed in the form of a fine powder, with particle size lower than about 70 µm. Preferably, the particle size of this component is between about 40 and 60 µm.

The getter alloy component of the above mixture of powders may consist of powders of one or more getter alloys, depending on the presence or not of hydrogen in the gas mixture to be sorbed by the getter. In fact, contrary to gases such as $O_2$, $N_2$, $H_2O$, CO, $CO_2$, etc. the sorption of hydrogen by the getters is a reversible phenomenon, which gives rise to an equilibrium; according to the temperature and the type of getter material, hydrogen divides up partly in the getter and partly in the surrounding atmosphere, so that a residual hydrogen pressure is always present inside the vessel to be evacuated. The amount of free hydrogen, and therefore the hydrogen pressure above the getter, increases with temperature for all getter materials. At the same temperature, different getter materials have an equilibrium pressure of free hydrogen which can vary by some orders of magnitude; the materials which, at the same temperature, absorb a greater amount of hydrogen, leaving thus a lower partial pressure of hydrogen in the environment, will be defined low hydrogen getter materials in the rest of the specification and in the claims.

Given the differences of behavior towards getters existing between hydrogen and the other gases, it is preferable that, when the intended use of the getter materials is in an environment containing non-negligible amounts of hydrogen, a low hydrogen getter material be added to the mixture of powders making up the getter material of the invention.

Getter alloys are generally chosen among the getter alloys based on titanium with one or more transition elements, or the getter alloys based on zirconium with one or more transition elements, such as the binary alloys Zr-Al, Zr-V, Zr-Fe and Zr-Ni or ternary alloys Zr-Mn-Fe or Zr-V-Fe. In case no hydrogen is present in the mixture of gases to be sorbed, the getter alloy component preferably consists of a single getter alloy. The use of Zr-V-Fe ternary alloys is preferred, and in particular of the above-mentioned St 707 alloy, having a percentage composition Zr 70% - V 24.6% - Fe 5.4% on a weight basis. In case non-negligible amounts of hydrogen have to be sorbed, it is preferred that the getter alloy component consists of more than one, preferably two, different getter alloys, comprising at least one low hydrogen getter material. The preferred combination of getter alloys in this case consists of a mixture of the above cited St 707 alloy and of an alloy having a weight percentage composition Zr 84% - Al 16%, manufactured and sold by SAES GETTERS, Milan, under the name St 101®.

The getter alloys are employed in the form of a very fine powder, with maximum particle size lower than 40 µm and preferably lower than 30 µm.

The weight ratio between the metallic getter element and the getter alloys may vary within a wide range, but is generally between 1:10 and 10:1 and preferably between 3:1 and 1:3. When two getter alloys are used, the weight ratio between said alloys can vary in a wide range, depending on the intended application, and in general is comprised between 1:20 and 20:1. Amounts of the metallic element higher than those indicated above result in a decrease of the gettering efficiency of the sample, whereas the use of excessive amounts of the getter alloys generally causes a difficulty in sintering the getter bodies obtained from the powder compression, with a consequent poor mechanical strength of the final getter bodies.

The organic compound of the invention is a material solid at room temperature which must have the characteristic of evaporating without leaving residues during the heat treatment for sintering the getter material. Preferably, said organic compound must completely evaporate at temperatures lower than about 300°C, so as not to generate reactive vapors at the temperatures at which the getter materials become active. Some examples of organic materials meeting said requirements are ammonium oxalate, ammonium benzoate and, particularly preferred, ammonium carbamate.

The organic compound is employed in the form of powder. This powder is employed in two fractions, the first of which has a particle size lower than 50 μm, and the second one has a particle size between 50 and about 150 μm. As for the process of the invention it is necessary that both fractions are present in the powder mixture not below a minimum amount, the weight ratio between the two fractions is between 4:1 and 1:4.

The weight of the organic compound is between 10 and 40% of the overall weight of the powder mixture of point A, and preferably ranges from 10 to 35% of the overall mixture weight prior to sintering. If the organic compound is employed in too little amounts, the getter body obtained upon sintering is scarcely porous, whereas with amounts of organic compound higher than 40% by weight it is not possible to obtain mechanically stable getter bodies.

The thus obtained powder mixture is subjected to a light compression, at pressure values lower than 1000 kg/cm$^2$, preferably between 50 and 800 kg/cm$^2$. Lower values of applied pressure give a final sintered body having poor mechanical strength, whereas higher compression values cause an excessive powder compactness, with a consequent reduction of the specific surface and, most of all, of the porosity.

After the compression, the powder mixture undergoes a heat treatment, in inert gas atmosphere or preferably under vacuum, at a temperature between 900°C and 1200°C, preferably between 1000°C and 1100°C, for a time ranging from 5 minutes to 1 hour.

The invention, in a second aspect thereof, relates to high-porosity getter materials obtained by means of the above-disclosed process.

In the description of the getter materials of the invention reference is made to the drawings, wherein:

Fig.1a shows a microphotograph obtained with a scanning electron microscope (SEM) magnified x 700 of a getter material of the invention whose preparation is described in example 1; Fig.1b shows a drawing reproducing the microphotograph of fig.1a;

Fig.2a shows a SEM microphotograph magnified x 700 of a getter material whose preparation, described in example 2, follows the process of the above-cited patent application DE-A-2,204,714; Fig.2b shows a drawing reproducing the microphotograph of fig.2a;

Fig.3a shows a SEM microphotograph magnified x 700 of a getter material prepared, as described in example 3, according to the above-cited patent GB-2,077,487; Fig.3b shows a drawing reproducing the microphotograph of fig.3a;

Fig.4a shows a SEM microphotograph magnified x 700 of a comparative getter material obtained according to the process described in example 4; Fig.4b shows a drawing reproducing the microphotograph of fig.4a;

Fig.5a shows a SEM microphotograph magnified x 700 of a comparative getter material obtained according to the process described in example 5; Fig.5b shows a drawing reproducing the microphotograph of fig.5a;

Fig.6a shows a SEM microphotograph magnified x 700 of a getter material of the invention whose preparation is described in example 6; Fig.6b shows a drawing reproducing the microphotograph of fig.6a;

Fig.7 illustrates a graph showing the gas absorption characteristics of the five samples of getter material of figs.1 to 5, using CO as test gas; the absorption rate (S), measured as cc of absorbed CO per second per gram of getter material, is given as a function of the amount (Q) of absorbed CO measured as ccxPa per gram of getter material;

Fig.8 shows a graph similar to that of fig. 7, obtained using nitrogen as the test gas;

Fig.9 illustrates a graph, similar to those of figures 7 and 8, showing the hydrogen sorption characteristics of a getter material of the invention and of a comparison getter material; and

Figs.10a-10d illustrate some possible shapes of getter bodies which can be obtained through the process of the present invention.

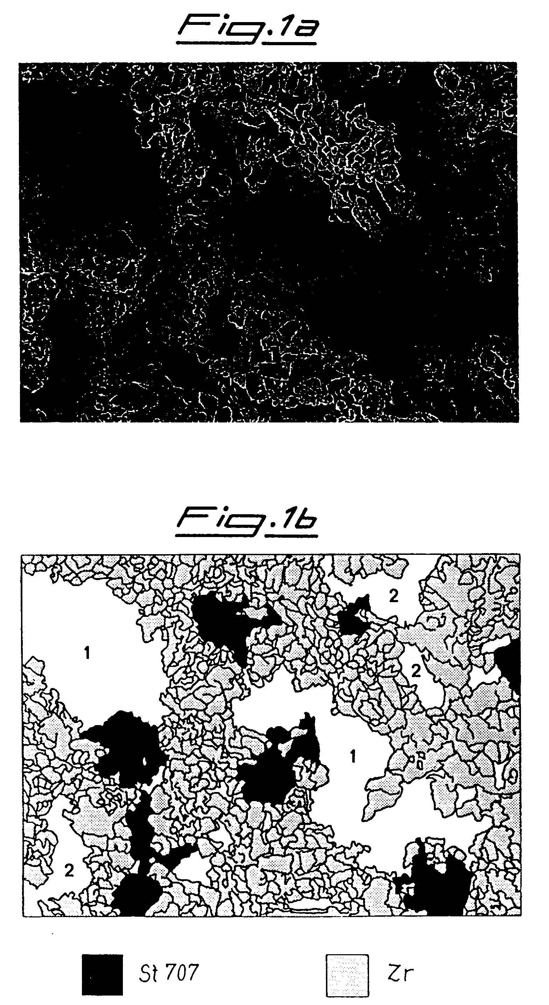

The getter materials of the invention, due to the particular production process, have a novel combination of structural and functional characteristics with respect to the prior art. In particular, referring to fig.1b, it should be noted that the getter materials of the invention have a porous structure made up of a first network of pores 1 of greater diameter, assuring an easy access of gases even to the most internal portions of the getter body. A second network of pores 2 of smaller diameter giving access to the surface of the single grains of the two getter materials is superimposed on said first network of pores. High values of porosity and surface area, together with a good mechanical strength, derive from said particular structure.

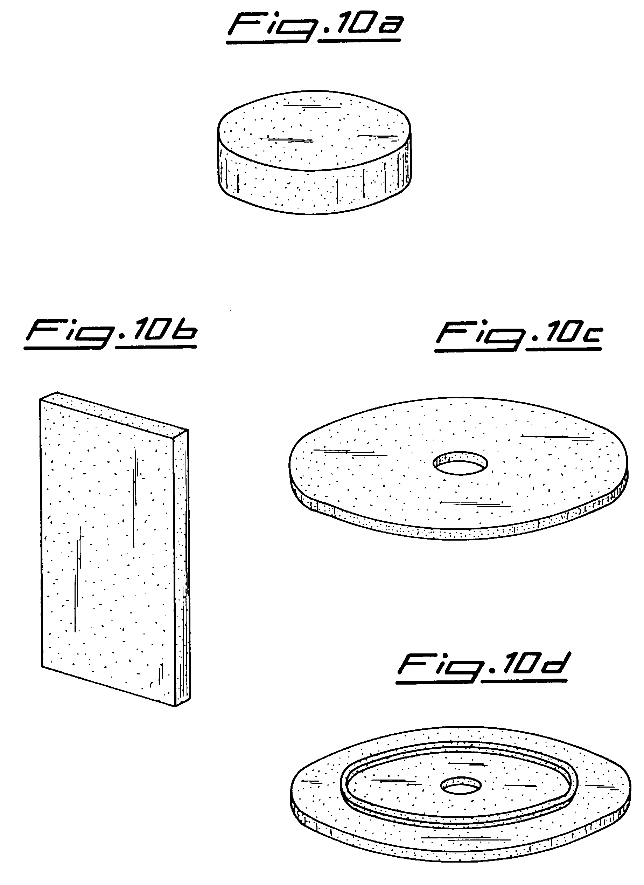

The getter bodies obtained according to the process of the invention can be employed in all applications requiring the presence of a getter material, such as maintaining vacuum inside lamps or thermally insulating interspaces (e.g. in thermos bottles). A possible shape of a getter body suitable for the use in thermos bottles is for example a pellet, as in the drawing of fig.10a. However, thanks to the particular functional characteristics of the getter materials of the invention, the advantages offered by the getter devices containing said materials are particularly apparent in the applications requiring high gas sorption performances with small-volume devices; for example, it is the case of the getter pumps in which the volume available for the getter material is small. Getter pumps of this type are disclosed, for example, in US patents Nos. 5,320,496 and 5,324,172 in the name of the Applicant. The first of said two patents discloses a pump in which the getter bodies are shaped as stacked discs arranged coaxially to the pump body. Possible alternative shapes of discs to be used in a pump similar to that of patent US 5,320,496, in addition to those described in said patent, are shown in figs.10c and 10d. The second patent discloses a getter pump made with plate-like getter bodies, radially arranged around the pump axis; a possible plate-like getter body to be used in this pump is shown in fig.10b.

Objects and advantages of the present invention will be apparent to those skilled in the art by reading the following examples; these examples are given for merely illustrative purposes and do not limit in any way the scope of the invention.

EXAMPLE 1

This example relates to the preparation of a getter material of the invention.

A mixture is prepared of 2.4 g of metallic zirconium having a particle size between 40 and 50 μm, 3.6 g of St 707 alloy having a particle size lower than 30 μm and 4.0 g of ammonium carbamate in two portions, of 2 g each, having a particle size between 0 and 50 μm and between 50 and 150 μm, respectively. The mixture is homogenized in a V-shaped mixer for 4 hours and compacted by subjecting it to a 150 Kg/cm$^2$ compression. The compacted mixture is then sintered by heat treatment in a vacuum furnace, by heating it to 1050°C in about 2 hours and by keeping it at said temperature for 30 minutes. The getter body thus prepared is sample 1.

EXAMPLE 2 (Comparative)

In this example there is described the preparation of a getter material according to the process described in patent application DE-A-2,204,714.

A mixture is prepared of 5.8 g of metallic zirconium having a particle size between 0 and 44 μm, 1.2 g of graphite powder having a particle size between 75 and 128 μm and 3 g of ammonium carbamate powder having a grain size of about 1 μm. The mixture is homogenized as in example 1 and sintered by heating it to 1050°C in 55 minutes and by keeping it at said temperature for 5 minutes. The sintered getter body taken out of the furnace is sample 2.

EXAMPLE 3 (Comparative)

In this example there is described the preparation of a porous getter material according to patent GB-2,077,487.

A mixture is prepared of 4 g of metallic zirconium powder having a particle size between 0 and 44 μm and 6 g of St 707 alloy having a particle size between 53 and 128 μm. The mixture is homogenized as in the preceding examples and sintered by following the same heat treatment of example 2. The getter body thus obtained is sample 3.

EXAMPLE 4 (Comparative)

The preparation of a getter material according to the procedure of example 2 is repeated but using a finer ammonium carbamate powder, with a grain size lower than 44 μm. The getter body thus obtained is sample 4.

EXAMPLE 5 (Comparative)

The preparation of a getter material according to the procedure of example 3 is repeated but pressing the powder mixture prior to sintering at a compression value of 70 Kg/cm$^2$. The getter body thus obtained is sample 5.

EXAMPLE 6

This example relates to the preparation of a getter material of the invention.

A mixture is prepared of 35 g of metallic zirconium having a particle size between 40 and 50 μm, 15 g of St 707 alloy having a particle size lower than 30 μm, 50 g of St 101® alloy having a particle size lower than 30 μm, 13 g of ammonium carbamate having a particle size between 0 and 50 μm and 20 g of ammonium carbamate having a particle size between 50 and 150 μm. The mixture is homogenized in a V-shaped mixer for 4 hours; 1,3 g of the homogenized mixture are compacted by subjecting them to a 600 Kg/cm$^2$ compression. The compacted mixture is then sintered by heat treatment in a vacuum furnace, by heating it to 1050°C in about 2 hours and by keeping it at said temperature for 30 minutes. The getter body thus prepared is sample 6.

EXAMPLE 7

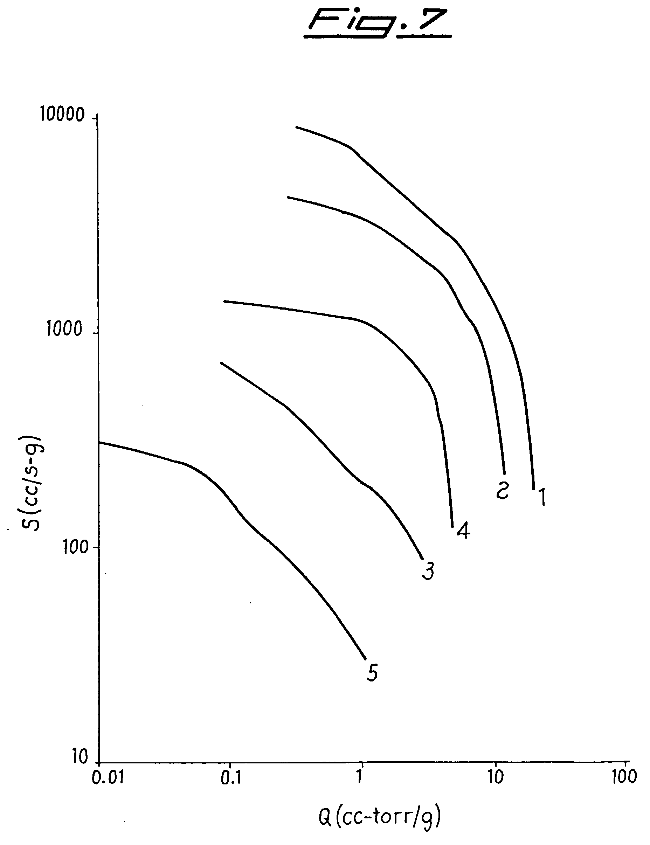

A measurement of the gas absorption rate and capacity is carried out on samples 1, 2, 3, 4 and 5 at room temperature, after activation thereof at 600°C for 10 minutes. The test is effected by measuring the rate at which each sample sorbs measured amounts of gas during a series of subsequent admissions of gas in the test chamber, according to the method of the ASTM F 798-82 standard. The test gas employed is CO. The results of the tests are shown in the graph of fig.7, respectively indicated as curves 1-5 for the five samples.

EXAMPLE 8

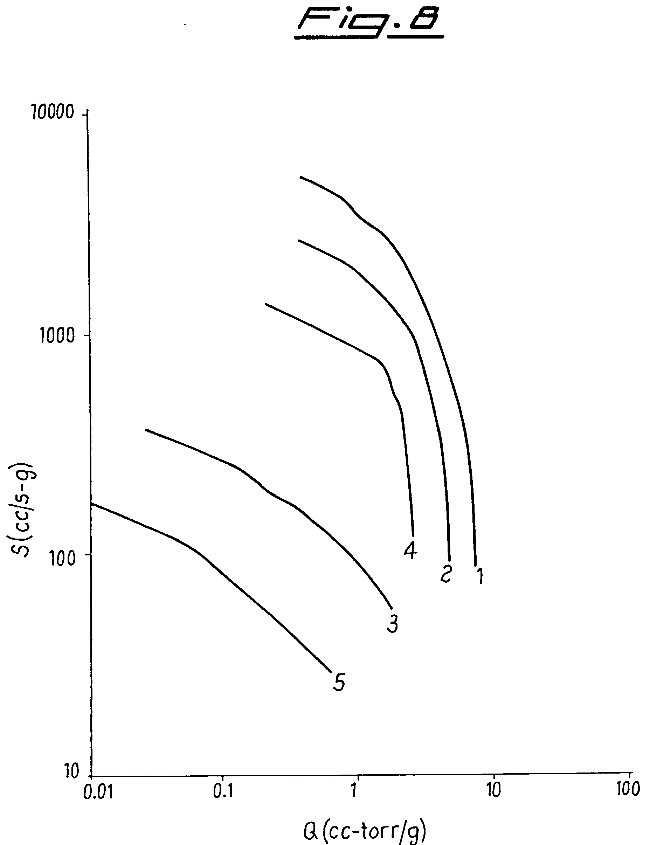

A measurement of the sorption characteristics of samples 1 to 5 is carried out under the same conditions of example 7, the only difference being that in this case the test gas is nitrogen. The results are shown in fig.8.

EXAMPLE 9

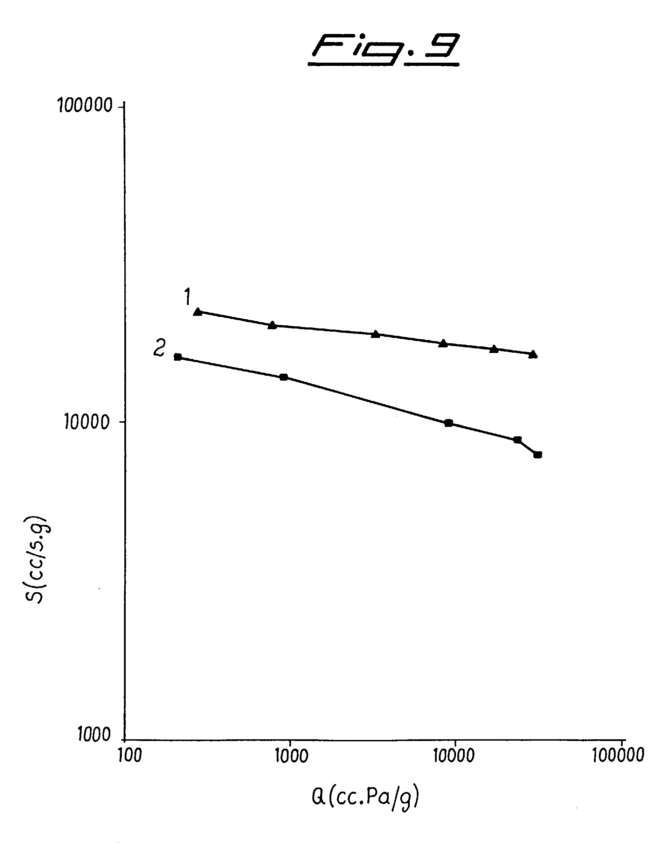

A measurement of the hydrogen sorption rate and capacity is carried out on samples 6 (invention) and 2 (comparative) at room temperature, after activation thereof at 600°C for 30 minutes. The test is effected according to the method of the ASTM F 798-82 standard. The results of the tests are shown in the graph of fig.9, respectively indicated as curves 1 and 2 for the two samples 6 and 2.

EXAMPLE 10

A measurement of the surface area is carried out on samples 1 to 6 according to the B.E.T. method, by using a Quantasorb QS-12 instrument. The results of this test are summarized in Table I.

EXAMPLE 11

The apparent density and the percent porosity of samples 1 to 6 are measured. The apparent density is calculated as the ratio between the weight of a sample and its geometric volume. The term porosity indicates the percent value calculated through the following formula:

$$\text{porosity \%} = (1 - d_{app}/d_t) \times 100$$

where $d_{app}$ is the above-defined apparent density of the sample and $d_t$ is its theoretical density; from the known absolute densities and weight fractions of the materials making up the sample, the value of $d_t$ is in turn calculated through the following two formulas, respectively formula I for the samples made up of two component materials (samples 1-5) and formula II for samples made up of three component materials (sample 6):

$$d_t = (d_A d_B) / (d_A X_B + d_B X_A) \tag{I}$$

and

$$d_t = (d_A d_B d_C) / (d_A d_B X_C + d_A d_C X_B + d_B d_C X_A) \qquad \text{(II)}$$

where:

$d_A$ = density of the first material making up the sample;

$d_B$ = density of the second material making up the sample;

$d_C$ = density of the third material making up the sample;

$X_A$ = weight fraction of the first material making up the sample;

$X_B$ = weight fraction of the second material making up the sample;

$X_C$ = weight fraction of the third material making up the sample;

The results are summarized in Table I.

TABLE I

| Sample | Surface area ($m^2/g$) | Apparent density ($g/cm^3$) | Porosity (%) |
|--------|------------------------|------------------------------|--------------|
| 1 | 0.17 | 1.85 | 71.1 |
| 2 | 0.19 | 1.43 | 70.8 |
| 3 | 0.08 | 5.07 | 20.8 |
| 4 | 0.17 | 1.46 | 70.2 |
| 5 | - | 6.10 | 4.7 |
| 6 | 0.19 | 2.10 | 63.9 |

The process for preparing the comparative sample 4 does not correspond to an already known process, but it is a variation of the process of example 2 wherein use is made of ammonium carbamate having a particle size lower than that of example 2, and comparable to the particle size of the ammonium carbamate used in the process of the invention. Similarly, the process for preparing the comparative sample 5 does not correspond to any process of the prior art, but it is a variation of the process of example 3, wherein use is made of a light compression of the powder mixture as in the process of the invention. The surface area of sample 5 is lower than the reading limit of the employed instrument, and however surely lower than the 0.08 $m^2/g$ value obtained for sample 3.

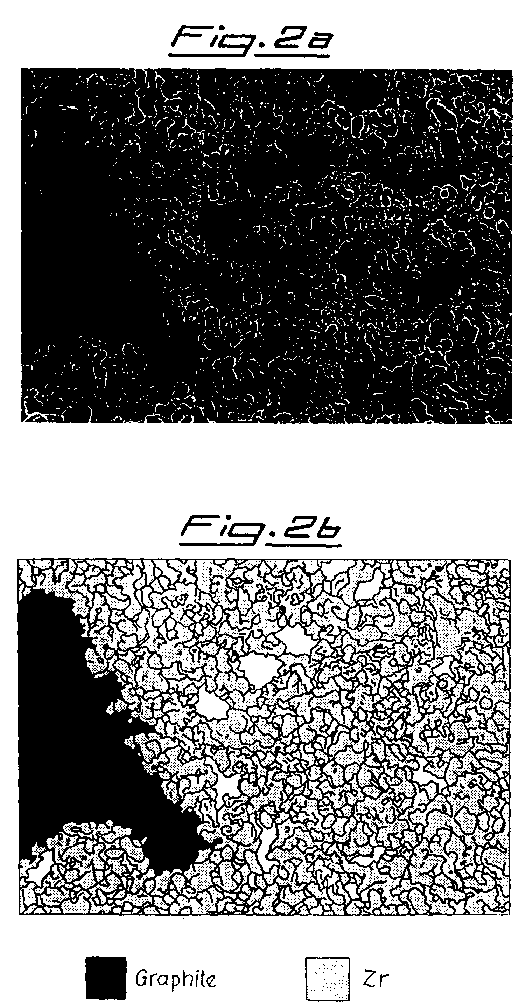

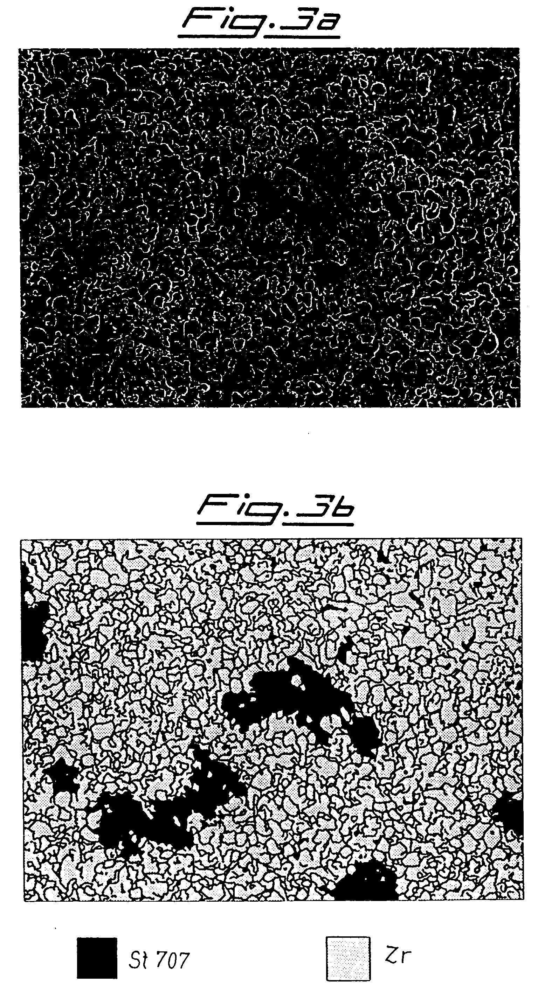

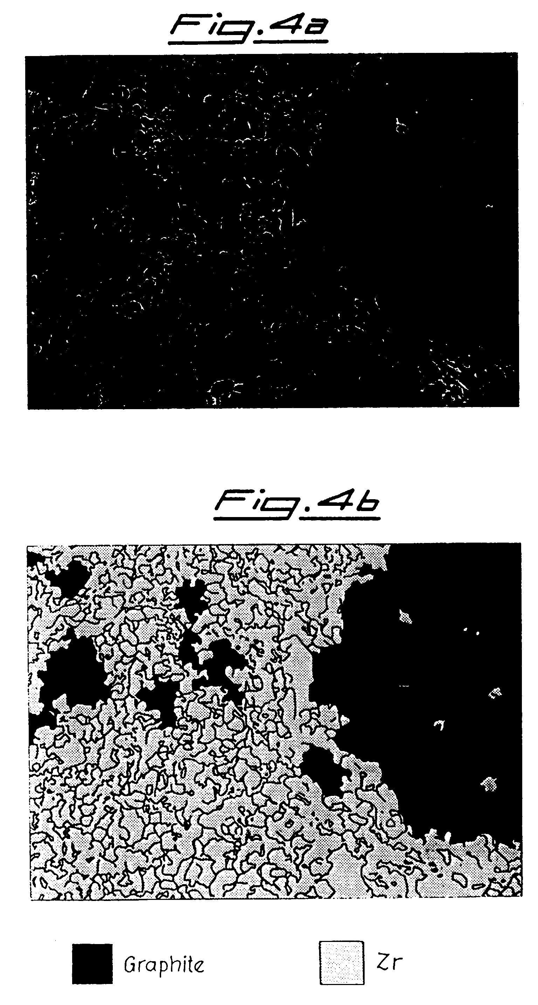

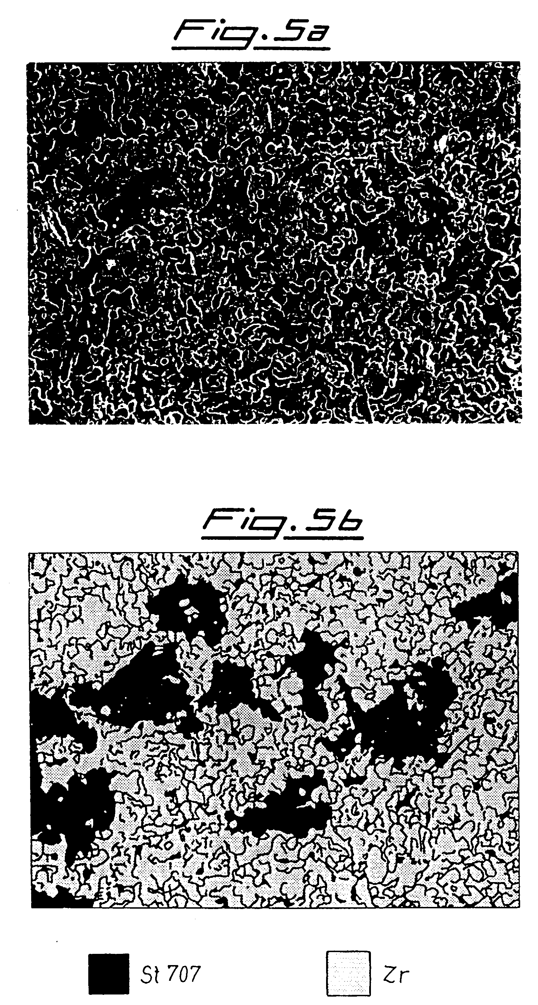

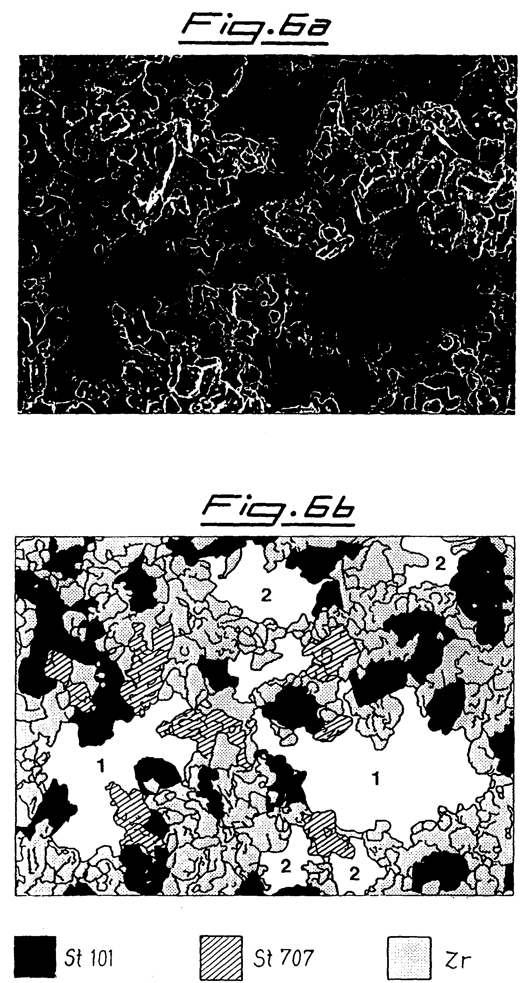

As it may be noted by examining the microphotographs of figs.1 to 6, sample 1 and 6, corresponding to getter materials of the invention, have a porous structure different both from that of prior art comparative samples 2 and 3, and from that of comparative samples 4 and 5. In particular, the getter bodies of the invention have a porous structure which makes them easily recognizable from the other samples, since it consists of macroporosities 1 permeating the sample body and microporosities 2 among the zirconium and alloy grains; in contrast, all samples 2 to 5 look more compact. The data in table I show that the comparative samples 2 and 4 have specific surface and porosity values comparable to those of samples 1 and 6, whereas samples 3 and 5 have specific surface and porosity much lower than samples 1 and 6. On the other hand, samples 2 and 4 have a poor mechanical strength, are friable and easily lose particles, which makes them not usable in technological applications. In addition to this improved combination of structural and mechanical characteristics, sample 1 of the invention also has the best gas sorption characteristics, as it may be noted by examining the graphs of figs.7 and 8 wherein the sorption curves at room temperature of samples 1-5 are given respectively for CO and $N_2$. In fact, sample 1 exhibits sorption characteristics for both gases much higher than samples 3 and 5, provided with a less porous structure. However, the sample of the invention also exhibits a sorption capacity for both gases better than samples 2 and 4, whose porosity characteristics are comparable to those of sample 1. Sample 6 of the invention shows the same good combination of properties, that is, high specific surface, high porosity and mechanical strength of sample 1. Also, sample 6 shows the very good hydrogen sorption properties of the getter materials of the invention when prepared using, as the getter alloy component, a mixture of getter alloys comprising a low hydrogen getter material. By an exam of the graph in fig.9 it can be noted that sample 6 exhibits hydrogen sorption characteristics higher than those of sample 2 provided with a structure of comparable porosity.

Finally, the comparison between the sorption characteristics of samples 2 and 4 and of samples 3 and 5 shows that only by operating according to the process of the invention it is possible to achieve the excellent results described above. In fact, the examination of these figures reveals that by changing the preparation of sample 2 (process of patent application DE-A-2,204,714) to make it more similar to the process of the invention, i.e. with ammonium carbamate having finer particle size (sample 4), the gas sorption gets worse. Similarly, a change in the process for preparing sample 3 (process of patent GB-2,077,487) by applying a light compression to the powder mixture to make it more similar to the process of the invention (thus obtaining sample 5), leads to a worsening of the gas sorption characteristics. In conclusion, the effected tests show that the samples of the invention exhibit the best gas sorption characteristics, together with a good mechanical strength which makes them suitable for technological applications; also, the comparison of properties of samples of the invention and comparative samples shows that this combination of characteristics depends on the particular process, characterized by the combination of its parameters, which could not have been simply derived by attempt changes of parameters of known processes.

## Claims

1.  A process for preparing non-evaporable getter materials having improved characteristics of porosity, gas sorption rate and capacity, comprising the following steps:

    A) preparing a mixture of:

      i) powders of a metallic getter element with grain size lower than about 70 $\mu$m;

      ii) powders of one or more getter alloys, with grain size lower than about 40 $\mu$m;

      iii) powders of an organic component solid at room temperature having the characteristic of sublimating or decomposing into gaseous products without leaving residues through mere exposure to air or during the subsequent heat treatments, in two sieve fractions such that the grains of the first fraction have a size lower than 50 $\mu$m, the grains of the second fraction have a size between 50 and about 150 $\mu$m and the weight ratio between the two fractions is between 4:1 and 1:4;
      wherein the weight of the organic component is between 10 and 40% of the overall weight of the powder mixture;

    B) subjecting the powder mixture of point A to compression at a pressure lower than 1000 kg/cm$^2$; and
    C) sintering the compressed powder mixture by vacuum or inert gas treatment at a temperature between 900 and 1200°C for a time between 5 minutes and 1 hour.

2.  A process according to claim 1, wherein the weight ratio between the metallic getter element and the getter alloys is between 1:10 and 10:1.

3.  A process according to claim 2, wherein the weight ratio between the metallic getter element and the getter alloys is between 1:3 and 3:1.

4.  A process according to claim 1, wherein the weight of the organic compound is between 10 and 35% of the overall weight of said powder mixture.

5.  A process according to claim 1, wherein the metallic getter element is zirconium.

6.  A process according to claim 1 wherein there is employed only one getter alloy.

7.  A process according to claim 6 wherein the getter alloy is a Zr-V-Fe ternary alloy having a weight percentage composition of Zr 70% - V 24.6% - Fe 5.4%.

8.  A process according to claim 1 wherein there are employed two getter alloys.

9.  A process according to claim 8 wherein the weight ratio between the two getter alloys is between 1:20 to 20:1.

**10.** A process according to claim 8 wherein the first getter alloy is a Zr-V-Fe alloy having a weight percentage composition of Zr 70% - V 24.6% - Fe 5.4% and the second alloy is a Zr-Al alloy having a weight percentage composition of Zr 84% - Al 16%.

**11.** A process according to claim 1, wherein the organic compound is ammonium carbamate.

**12.** A process according to claim 1, wherein the powder mixture is compressed with a pressure between 50 and 800 kg/cm$^2$.

**13.** High-porosity getter bodies obtained according to the process of claim 1.

**14.** Getter bodies according to claim 13 shaped as pellets, sheets or discs.


**Patentansprüche**

**1.** Verfahren zur Herstellung nichtverdampfbarer Gettermaterialien mit verbesserten Porositätseigenschaften und erhöhter Gassorptionsgeschwindigkeit und -kapazität, umfassend folgende Stufen:

A) Herstellung eines Gemisches von

I) Pulvern aus einem metallischen Getterelement mit einer Korngröße von unter etwa 70 μm,

II) Pulvern aus einer oder mehreren Getterlegierungen mit einer Korngröße von unter etwa 40 μm und

III) Pulvern aus einer organischen Komponente, die bei Raumtemperatur fest ist und die Eigenschaft besitzt, nur, indem sie der Luft ausgesetzt wird oder während den nachfolgenden Wärmebehandlungen, zu sublimieren oder sich zu gasförmigen Produkten rückstandsfrei zu zersetzen, in zwei derartigen Siebfraktionen, daß die Körner der ersten Fraktion eine Größe von unter 50 μm und die Körner der zweiten Fraktion eine Größe von zwischen 50 und etwa 150 μm haben und das Gewichtsverhältnis der beiden Fraktionen zwischen 4 : 1 und 1 :4 beträgt,
wobei das Gewicht der organischen Komponente zwischen 10 und 40 % des Gesamtgewichts des Pulvergemisches ausmacht,

B) Verdichten des Pulvergemisches aus Punkt A mit einem Druck von weniger als 1000 kg/cm$^2$ und

C) Sintern des verdichteten Pulvergemisches durch zwischen 5minütiger und einstündiger Vakuum- oder Inertgasbehandlung bei einer Temperatur von zwischen 900 und 1200 °C.

**2.** Verfahren nach Anspruch 1, worin das Gewichtsverhältnis des metallischen Getterelements zu den Getterlegierungen zwischen 1 : 10 und 10 : 1 beträgt.

**3.** Verfahren nach Anspruch 2, worin das Gewichtsverhältnis des metallischen Getterelements zu den Getterlegierungen zwischen 1 : 3 und 3 : 1 beträgt.

**4.** Verfahren nach Anspruch 1, worin das Gewicht der organischen Verbindung zwischen 10 und 35 % des Gesamtgewichts des Pulvergemisches ausmacht.

**5.** Verfahren nach Anspruch 1, worin das metallische Getterelement Zirconium ist.

**6.** Verfahren nach Anspruch 1, worin nur eine Getterlegierung eingesetzt wird.

**7.** Verfahren nach Anspruch 6, worin die Getterlegierung eine ternäre Zr-V-Fe-Legierung mit einer Gewichtszusammensetzung von 70 % Zr, 24,6 % V und 5,4 % Fe ist.

**8.** Verfahren nach Anspruch 1, worin zwei Getterlegierungen eingesetzt werden.

**9.** Verfahren nach Anspruch 8, worin das Gewichtsverhältnis der beiden Getterlegierungen zwischen 1 : 20 und 20 :

1 beträgt.

**10.** Verfahren nach Anspruch 8, worin die erste Getterlegierung eine Zr-V-Fe-Legierung mit einer Gewichtszusammensetzung von 70 % Zr, 24,6 % V und 5,4 % Fe und die zweite Legierung eine Zr-Al-Legierung mit einer Gewichtszusammensetzung von 84 % Zr und 16 % Al ist.

**11.** Verfahren nach Anspruch 1, worin die organische Verbindung Ammoniumcarbamat ist.

**12.** Verfahren nach Anspruch 1, worin das Pulvergemisch mit einem Druck von zwischen 50 und 800 kg/cm$^2$ verdichtet wird.

**13.** Hochporöse Getterkörper, hergestellt gemäß dem Verfahren des Anspruchs 1.

**14.** Getterkörper nach Anspruch 13, die zu Tabletten, Platten oder Scheiben geformt sind.

**Revendications**

**1.** Un procédé de préparation de matériaux de fixateur de gaz, non évaporables, ayant des caractéristiques améliorées en matière de porosité, vitesse et capacité de sorption des gaz, comprenant l'étape suivante :

   A) préparation d'un mélange constitué de :

      i) poudres d'élément fixateur de gaz métallique ayant une taille de grain inférieure à environ 70 µm;
      ii) de poudres d'un ou plusieurs alliages fixateurs de gaz, d'une taille de grain inférieure à environ 40 µm;
      iii) poudres d'un composé organique, solide à la température ambiante, présentant les caractéristiques de se sublimer ou de se décomposer en produits gazeux sans laisser de résidus, par simple exposition à l'air ou durant les traitements thermiques subséquents, en deux fractions granulométriques, de manière que les grains de la première fraction aient une taille inférieure à 50 µm, les grains de la deuxième fraction aient une taille entre 50 et environ 150 µm et le rapport de poids entre les deux fractions étant compris entre 4 : 1 et 1 : 4; dans lequel le poids du composé organique est situé entre 10 et 40 % en poids du poids global du mélange pulvérisant;

   B) soumission du mélange pulvérisant du point A à une compression effectuée à une pression inférieure à 1000 kg/cm$^2$; et
   C) frittage du mélange pulvérisant comprimé, par un traitement sous vide ou sous gaz inerte, conduit à une température située entre 900 et 1200°C pendant une durée comprise entre 5 minutes et 1 heure.

**2.** Un procédé selon la revendication 1, dans lequel le rapport àe poids entre l'élément métallique fixateur de gaz et les alliages fixateurs de gaz est situé entre 1 : 10 et 10 : 1.

**3.** Un procédé selon la revendication 2, dans lequel le rapport de poids entre l'élément métallique fixateur de gaz et les alliages fixateurs de gaz est compris entre 1 : 3 et 3 : 1.

**4.** Un procédé selon la revendication 1, dans lequel le poids du composé organique est compris entre 10 et 35 % du poids global dudit mélange pulvérulent.

**5.** Un procédé selon la revendication 1, dans lequel l'élément métallique fixateur de gaz est le zirconium.

**6.** Un procédé selon la revendication 1, dans lequel on utilise seulement un alliage fixateur de gaz.

**7.** Un procédé selon la revendication 6, dans lequel l'alliage fixateur de gaz est un alliage ternaire Zr-V-Fe ayant une composition exprimée en pourcentage de poids de Zr 70 % - V 24,68 % - Fe 5,4 %.

**8.** Un procédé selon la revendication 1, dans lequel on utilise deux alliages fixateurs de gaz.

**9.** Un procédé selon la revendication 8, dans lequel le rapport de poids entre les deux alliages fixateurs de gaz est compris entre 1 : 20 et 20 : 1.

**10.** Un procédé selon la revendication 8, dans lequel le premier alliage fixateur de gaz est un alliage Zr-V-Fe ayant une composition en pourcentage de poids de Zr 70 % - V 24,68 % - Fe 5,4 % et le deuxième alliage est un alliage Zr-Al ayant une composition en pourcentage de poids de Zr 84 % - Al 16 %.

**11.** Un procédé selon la revendication 1, dans lequel le composé organique est du carbamate d'ammonium.

**12.** Un procédé selon la revendication 1, dans lequel le mélange pulvérulent est comprimé à une pression comprise entre 50 et 800 kg/cm$^2$.

**13.** Corps fixateurs de gaz à haute porosité obtenus selon le procédé de la revendication 1.

**14.** Corps fixateurs de gaz selon la revendication 13, façonnés sous forme de boulettes, de feuilles ou de disques.

## _Fig.1a_

## _Fig.1b_

| ■ | St 707 | ▨ | Zr |
|---|--------|---|-----|

## _Fig.2a_

## _Fig.2b_

■ Graphite ▢ Zr

## Fig.3a

## Fig.3b

■ St 707        ▢ Zr

## *Fig.4a*

## *Fig.4b*

■ Graphite ▢ Zr

## _Fig.5a_

## _Fig.5b_

St 707          Zr

## Fig.6a

## Fig.6b

| ■ St 101 | ⧄ St 707 | ▨ Zr |

_Fig.7_

# Fig.8

Fig.9

_Fig.10a_

_Fig.10b_

_Fig.10c_

_Fig.10d_